# EUROPÄISCHE PATENTANMELDUNG

(11) **EP 4 438 397 A1**
(43) Veröffentlichungstag der Anmeldung: **02.10.2024**
(21) Anmeldenummer: 23211372.0
(22) Anmeldetag: 22.11.2023
(51) Int. Cl.: B60L 58/27

(54) **ENERGIEVERSORGUNGSEINHEIT, SYSTEM UND SCHWERLAST-MODULFAHRZEUG**

(30) Priorität: 27.03.2023 DE 102023202728
(71) Anmelder: Scheuerle Fahrzeugfabrik GmbH, 74629 Pfedelbach (DE)
(72) Erfinder: Maier, Tobias, 89197 Weidenstetten (DE); Schmalzbauer, Jens, 74639 Zweiflingen (DE); Stückle, Andreas, 70567 Stuttgart (DE)
(74) Vertreter: Ullrich & Naumann PartG mbB

(57) **Zusammenfassung**

Eine Energieversorgungseinheit (2) für ein elektrohydraulisches Aggregat (3) eines Schwerlast-Modulfahrzeugs (31) mit mindestens einer elektrischen Energiequelle (7) zum Betreiben eines Elektromotors (4) des elektrohydraulischen Aggregats (3) und mindestens einem Gleichspannungs-Verbindungselement (9) zur Herstellung einer lösbaren, elektrischen Gleichspannungsverbindung der mindestens einen elektrischen Energiequelle (7) mit dem Elektromotor (4). Des Weiteren sind ein System (1) umfassend mindestens eine Energieversorgungseinheit (2) und ein elektrohydraulisches Aggregat (3) für ein Schwerlast-Modulfahrzeug (31) sowie ein Schwerlast-Modulfahrzeug (31) beschrieben.

## Beschreibung

Die Erfindung betrifft eine Energieversorgungseinheit für ein elektrohydraulisches Aggregat eines Schwerlast-Modulfahrzeugs.

Des Weiteren betrifft die Erfindung ein System umfassend mindestens eine solche Energieversorgungseinheit und ein elektrohydraulisches Aggregat für ein Schwerlast-Modulfahrzeug.

Weiterhin betrifft die Erfindung ein Schwerlast-Modulfahrzeug.

Schwerlast-Modulfahrzeuge der in Rede stehenden Art sind seit Jahren aus der Praxis bekannt. Diese weisen üblicherweise ein oder mehrere miteinander gekoppelte Fahrwerke auf, die über ein oder mehrere Antriebseinheiten angetrieben werden. Die Antriebseinheiten, sog. Power Pack Units, weisen ein Antriebsaggregat, beispielsweise einen Dieselmotor oder einen Elektromotor auf, mit welchem eine Hydraulikpumpe angetrieben wird. Über entsprechende Fluidverbindungen kann somit ein hydrostatischer Antrieb an der bzw. den Fahrwerken betrieben werden.

Durch entsprechende Schwerlast-Modulfahrzeuge ist es möglich, nahezu beliebig große Transportverbünde zu realisieren, um somit extreme Lasten transportieren zu können. Bei den bekannten Antriebseinheiten ist das Antriebsaggregat und somit die das Schwerlast-Modulfahrzeug antreibende Primärenergiequelle fest vorgegeben. Eine Anpassung an lokale Emissionsvorgaben ist daher nur durch den Austausch der Antriebseinheit als solcher möglich, was mit einem erheblichen Aufwand einhergeht, der zu Stillstandszeiten des Schwerlast-Modulfahrzeugs führt. Insgesamt besteht bei bekannten Antriebseinheiten somit das Problem, dass diese nicht flexibel an unterschiedliche Anforderungen bzw. Randbedingungen anpassbar sind.

Der vorliegenden Erfindung liegt daher die Aufgabe zugrunde, eine Energieversorgungseinheit und ein System mit einer Energieversorgungseinheit und einem elektrohydraulischen Aggregat anzugeben, welches einen flexiblen und zuverlässigen elektrischen Betrieb von Schwerlast-Modulfahrzeugen ermöglicht. Des Weiteren soll ein verbessertes Schwerlast-Modulfahrzeug angegeben werden.

Erfindungsgemäß wird die voranstehende Aufgabe in Bezug auf die Energieversorgungseinheit durch die Merkmale des Anspruches 1 gelöst. Damit ist eine Energieversorgungseinheit für ein elektrohydraulisches Aggregat eines Schwerlast-Modulfahrzeugs beansprucht, mit mindestens einer elektrischen Energiequelle zum Betreiben eines Elektromotors des elektrohydraulischen Aggregats und mindestens einem Gleichspannungs-Verbindungselement zur Herstellung einer lösbaren, elektrischen Gleichspannungsverbindung der mindestens einen elektrischen Energiequelle mit dem Elektromotor.

In Bezug auf das System wird die voranstehende Aufgabe durch die Merkmale des Anspruches 8 gelöst. Damit ist ein System umfassend eine Energieversorgungseinheit nach einem der Ansprüche 1 bis 7 und ein elektrohydraulisches Aggregat für ein Schwerlast-Modulfahrzeug beansprucht, wobei das elektrohydraulische Aggregat einen Elektromotor und mindestens eine von diesem angetriebene Hydraulikpumpe aufweist, wobei an dem elektrohydraulischen Aggregat mindestens ein zu dem elektrischen Gleichspannungs-Verbindungselement der Energieversorgungseinheit komplementäres elektrisches Gleichspannungs-Verbindungselement angeordnet ist, so dass der mindestens eine elektrische Energiespeicher lösbar, elektrisch mit dem Elektromotor verbindbar ist.

In Bezug auf das Schwerlast-Modulfahrzeug wird die voranstehende Aufgabe durch die Merkmale des Anspruches 14 gelöst. Damit ist ein Schwerlast-Modulfahrzeug mit mindestens einem System nach einem der Ansprüche 8 bis 13 und mindestens einem Fahrwerk beansprucht.

In erfindungsgemäßer Weise ist erkannt worden, dass die zugrundeliegende Aufgabe in verblüffend einfacher Weise durch eine Energieversorgungseinheit gelöst werden kann, welche die zur elektrischen Energieversorgung benötigte elektrische Energiequelle aufweist und austauschbar ausgebildet ist. Im Konkreten weist die Energieversorgungseinheit hierzu mindestens eine elektrischen Energiequelle auf, mit welcher der Elektromotor eines elektrohydraulischen Aggregats betreibbar ist. Die Energieversorgungseinheit ist dabei lösbar mit dem elektrohydraulischen Aggregat elektrisch koppelbar, d.h. die benötigte Gleichspannungsverbindung ist lösbar ausgebildet. Wesentlich ist dabei, dass die Energieversorgungseinheit ein Gleichstrom-Verbindungselement aufweist, so dass stets die gleiche Schnittstelle zwischen Energieversorgungseinheit und elektrohydraulischem Aggregat besteht, wodurch die Modularität des Systems erreicht wird. Somit erfüllt das System aus elektrohydraulischem Aggregat und Energieversorgungseinheit die Aufgabe einer Antriebseinheit (PPU) für ein Schwerlast-Modulfahrzeug, wobei die Energieversorgungseinheit und damit die elektrische Energiequelle auswechselbar ist. Somit ist die hydraulische Energiebereitstellung unabhängig bzw. entkoppelt von der als Primärenergiequelle dienenden elektrischen Energiequelle der Energieversorgungseinheit. Ein Austausch der Primärenergiequelle hat somit keinen Einfluss auf das elektrohydraulische Aggregat. Dadurch können lokale Emissionsvorgaben mit geringstem Aufwand erfüllt werden, beispielsweise kann innerhalb einer Halle ein elektrischer Energiespeicher als Primärenergiequelle genutzt werden, außerhalb der Halle hingegen ein von einem Verbrennungsmotor betriebener Generator. Dies hat den weiteren Vorteil, dass die Primärenergiequelle an die Verfügbarkeit von Kraftstoffen und die Energieversorgung, beispielsweise eine Netzinfrastruktur anpassbar ist. Auch ein Notbetrieb durch den Einsatz einer alternativen Primärenergiequelle oder ein Wechsel bei einem Ausfall der elektrischen Energiequelle ist mit geringem Aufwand realisierbar. Insgesamt wird ein flexibler und zuverlässiger Betrieb des Schwerlast-Modulfahrzeugs gewährleistet. In vorteilhafter Weise kann die Energieversorgungseinheit elektrische, hydraulische, mechanische und ggf. weitere Verbindungselemente aufweisen, um alle notwendigen Medien und Signale, die zum Betrieb notwendig sind, übertragen zu können, wobei diese Verbindungselemente eine lösbare Verbindung ermöglichen, so dass ein einfacher Austausch der Energiespeicher möglich ist. Alternativ oder zusätzlich könnte ein Steuerleitungs-Verbindungselement angeordnet sein, um eine Steuerleitung zwischen Energieversorgungseinheit und elektrohydraulischem Aggregat bereitzustellen, wobei es sich auch hier um eine einfach zu lösende Verbindung handeln sollte.

Der Begriff "elektrischer Energiespeicher" ist im Rahmen dieser Offenbarung im weitesten Sinne zu verstehen, kann es sich dabei um einen beliebigen elektrischen Energiespeicher handeln, der vorzugsweise wiederaufladbar ausgebildet ist.

In vorteilhafter Weise kann an der Energieversorgungseinheit mindestens ein mechanisches Verbindungselement zur Herstellung einer lösbaren, mechanischen Verbindung mit dem elektrohydraulischen Aggregat und/oder einem Fahrwerk des Schwerlast-Modulfahrzeugs angeordnet sein. Durch diese konstruktive Maßnahme wird es ermöglicht, die Energieversorgungseinheit und somit die Primärenergiequelle auf einfache Weise durch den Endnutzer entsprechend den äußeren Anforderungen auszuwählen und an der benötigten Position im Schwerlast-Modulfahrzeug anzuordnen.

In weiter vorteilhafter Weise kann es sich bei der mindestens einen elektrischen Energiequelle um eine Brennstoffzelle, um einen Energiespeicher, um einen von einem Verbrennungsmotor betriebenen Generator und/oder um einen Gleichstrom-Netzanschluss mit Gleichrichter handeln. Im Konkreten ist es dabei denkbar, dass eine oder mehrere Energiespeicher, beispielsweise Akkumulatoren bzw. Batterien, gemeinsam mit einem von einem Verbrennungsmotor betriebenen Generator an der Energieversorgungseinheit angeordnet sind. Dadurch ist es beispielsweise möglich, das Schwerlast-Modulfahrzeug über den elektrischen Energiespeicher emissionsfrei zu betreiben und den von dem Verbrennungsmotor betriebenen Generator lediglich dann zu nutzen, wenn der elektrische Energiespeicher entladen ist. Bei einer solchen Ausgestaltung ist es auch denkbar, dass der von dem Verbrennungsmotor betriebene Generator dazu genutzt werden könnte, den elektrischen Energiespeicher zu laden.

Vorteilhafterweise kann es sich bei dem Energiespeicher um eine Batterie oder einen Akkumulator handeln. Der Energiespeicher kann eine Nennspannung von über 400 Volt, beispielsweise von 400 Volt bis 1000 Volt, vorzugsweise von 400 Volt bis 800 Volt und/oder eine Nennleistung im Bereich von 100 kW bis 1000 kW und/oder eine Kapazität von 40 kWh bis 1000 kWh, aufweisen. Energiespeicher mit entsprechenden Kennwerten sind besonders gut zum Betrieb eines elektrohydraulischen Aggregats geeignet.

In besonders vorteilhafter Weise kann die Energieversorgungseinheit einen Gleichstrom-Netzanschluss und einen elektrischen Energiespeicher als elektrische Energiequellen aufweisen. Dabei kann eine elektrische Verbindung zwischen dem Gleichstrom-Netzanschluss mit Gleichrichter und dem elektrischen Energiespeicher ausgebildet sein, so dass der elektrische Energiespeicher über ein externes Stromnetz geladen werden.

Gemäß einer vorteilhaften Ausgestaltung kann mindestens ein Wechselspannungs-Verbindungselement zur Herstellung einer lösbaren, elektrischen Wechselspannungsverbindung zwischen dem Gleichstrom-Netzanschluss mit Gleichrichter und einem Netzanschluss bzw. einem externen Stromnetz vorgesehen sein.

Zum Betrieb einer Brennstoffzelle oder eines von einem Verbrennungsmotor betriebenen Generators können ein Wasserstofftank und/oder ein Kraftstofftank angeordnet sein. Durch diese Konstruktion wird eine autark funktionsfähige Energieversorgungseinheit angegeben.

In vorteilhafter Weise kann es sich bei dem Gleichspannungs-Verbindungselement und/oder dem Wechselspannungs-Verbindungselement um einen Steckverbinder handeln. Dabei ist es denkbar und von Vorteil, wenn das Gleichspannungs-Verbindungselement und/oder das Wechselspannungs-Verbindungselement dazu ausgelegt ist/sind, Ströme von mindestens 300 A zu transportieren.

Des Weiteren ist es denkbar und von Vorteil, dass eine Kühleinrichtung zum Kühlen der mindestens einen elektrischen Energiequelle und/oder eine Heizeinrichtung zum Beheizen der mindestens einen elektrischen Energiequelle angeordnet ist/sind. Durch diese Maßnahme kann die Energieversorgungseinheit im Wesentlichen unabhängig von der herrschenden Außentemperatur zuverlässig betrieben werden. Hierbei ist es weiterhin denkbar, dass mindestens ein Fluidverbindungselement zur Herstellung einer lösbaren Fluidverbindung der Kühleinrichtung und/oder der Heizeinrichtung mit dem elektrohydraulischen Aggregat angeordnet ist.

In weiter vorteilhafter Weise kann an dem elektrohydraulischen Aggregat mindestens ein mechanisches Verbindungselement angeordnet sein, das komplementär zu dem mindestens einen mechanischen Verbindungselement der Energieversorgungseinheit ausgebildet ist, so dass die Energieversorgungseinheit und das elektrohydraulische Aggregat lösbar, mechanisch miteinander verbindbar sind. Dadurch wird erreicht, dass die Primärenergiequelle mit dem elektrohydraulischen Aggregat lösbar koppelbar ist, so dass ein Wechsel der Primärenergiequelle mit geringem Aufwand erfolgen kann.

In besonders vorteilhafter Weise kann an dem elektrohydraulischen Aggregat mindestens eine Aufnahme für die Energieversorgungseinheit angeordnet sein, beispielsweise ein Rahmen oder ein Gehäuse. Mit anderen Worten ist es denkbar, dass die Energieversorgungseinheit in das elektrohydraulische Aggregat integriert werden kann, wobei wesentlich ist, dass die Energieversorgungseinheit auf einfache Weise mechanisch und elektrisch von dem elektrohydraulischen Aggregat gelöst werden kann. Dabei ist es auch denkbar, dass die Energieversorgungseinheit dazu ausgebildet ist, extern mitgeführt zu werden, beispielsweise auf einem Begleitfahrzeug. Die Energieübertragung hin zu dem elektrohydraulischen Aggregat könnte dann kabelgebunden erfolgen.

Gemäß einer weiteren vorteilhaften Ausgestaltung kann die Energieversorgungseinheit, in Längsrichtung des elektrohydraulischen Aggregats gesehen, seitlich an dem elektrohydraulischen Aggregat festlegbar sein, vorzugsweise an beiden Seiten des elektrohydraulischen Aggregats. Alternativ oder zusätzlich kann mindestens eine Energieversorgungseinheit an einer Unterseite und/oder an einer Oberseite des elektrohydraulischen Aggregats festlegbar sein. Gemäß einer weiteren alternativen oder zusätzlichen Ausgestaltung kann mindestens eine Energieversorgungseinheit an einer Vorderseite und/oder an einer Hinterseite des elektrohydraulischen Aggregats festlegbar sein. Je nachdem, wo die Energieversorgungseinheit angeordnet ist, sind somit entsprechende mechanische Verbindungselemente an dem elektrohydraulischen Aggregat vorzusehen.

In vorteilhafter Weise kann an dem Fahrwerk mindestens ein mechanisches Verbindungselement angeordnet sein, das komplementär zu dem mindestens einen mechanischen Verbindungselement der Energieversorgungseinheit ausgebildet ist, so dass die Energieversorgungseinheit und das Fahrwerk lösbar, mechanisch miteinander verbindbar sind. Dadurch ist es möglich, die Energieversorgungseinheit unter Berücksichtigung des gesamten Fahrzeugverbunds an einer idealen Position anzuordnen.

Es gibt nun verschiedene Möglichkeiten, die Lehre der vorliegenden Erfindung in vorteilhafter Weise auszugestalten und weiterzubilden. Dazu ist einerseits auf die den Ansprüchen 1, 8 und 14 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines erfindungsgemäßen Systems,
- Fig. 2: in einer schematischen Darstellung ein Ausführungsbeispiel einer erfindungsgemäßen Energieversorgungseinheit,
- Fig. 3: in einer schematischen Darstellung ein weiteres Ausführungsbeispiel einer erfindungsgemäßen Energieversorgungseinheit,
- Fig. 4: in einer schematischen Darstellung ein weiteres Ausführungsbeispiel einer erfindungsgemäßen Energieversorgungseinheit,
- Fig. 5: in einer schematischen Darstellung ein weiteres Ausführungsbeispiel einer erfindungsgemäßen Energieversorgungseinheit,
- Fig. 6: in einer schematischen Darstellung ein weiteres Ausführungsbeispiel einer erfindungsgemäßen Energieversorgungseinheit,
- Fig. 7: in einer schematischen Darstellung, eine Seitenansicht eines Ausführungsbeispiels eines erfindungsgemäßen Schwerlast-Modulfahrzeugs,
- Fig. 8: in einer schematischen Darstellung, eine Draufsicht auf das SchwerlastModulfahrzeug gemäß Fig. 7,
- Fig. 9: in einer schematischen Darstellung, eine Seitenansicht eines weiteren Ausführungsbeispiels eines erfindungsgemäßen Schwerlast-Modulfahrzeugs, und
- Fig. 10: in einer schematischen Darstellung, eine Draufsicht auf das SchwerlastModulfahrzeug gemäß Fig. 9.

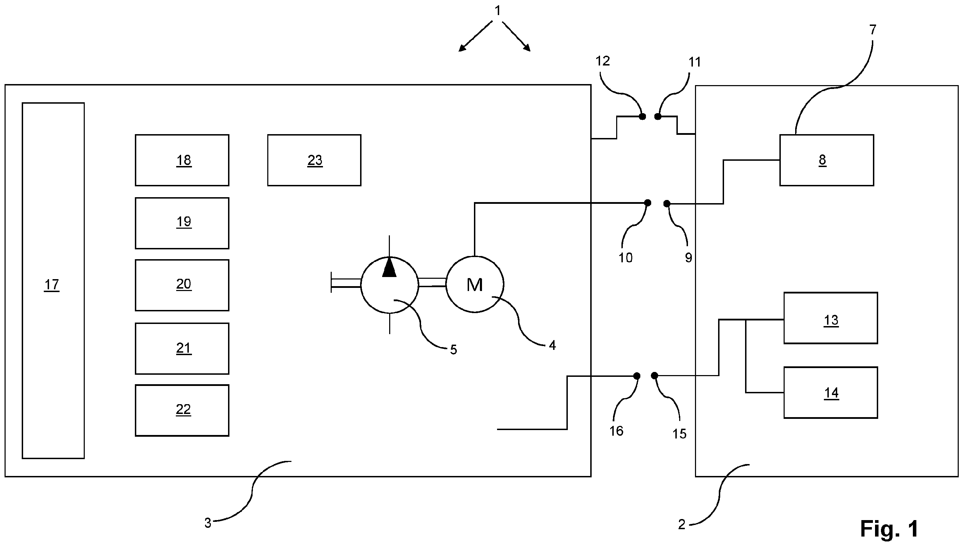

Fig. 1 zeigt ein Ausführungsbeispiel eines erfindungsgemäßen Systems 1 mit einer erfindungsgemäßen Energieversorgungseinheit 2 und einem elektrohydraulischen Aggregat 3.

Das elektrohydraulisch Aggregat 3 weist einen Elektromotor 4 auf, über den eine Hydraulikpumpe 5 antreibbar ist, wobei auch mehrere Hydraulikpumpen 5 vorgesehen sie können. Die Hydraulikpumpe 5 kann über eine Fluidverbindung mit einem in Fig. 1 nicht dargestellten Fahrwerk 6 gekoppelt werden, so dass dieses hydrostatisch angetrieben werden kann.

Die Energieversorgungseinheit 2 weist in dem hier dargestellten Ausführungsbeispiel als elektrische Energiequelle 7 einen elektrischen Energiespeicher 8 auf, insbesondere eine Batterie bzw. Akkumulator, wobei auch mehrere Energiespeicher 8 angeordnet sein können. Wesentlich ist, dass die Energieversorgungseinheit 2 mindestens ein Gleichspannungs-Verbindungselement 9 aufweist. Mit diesem ist eine lösbare Gleichspannungsverbindung mit einem korrespondierenden Gleichspannungs-Verbindungselement 10 des elektrohydraulischen Aggregats 3 herstellbar.

Des Weiteren ist an der Energieversorgungseinheit 2 mindestens ein mechanisches Verbindungselement 11 ausgebildet, das mit einem korrespondierenden mechanischen Verbindungselement 12 des elektrohydraulischen Aggregats 3 koppelbar ist, um eine lösbare mechanische Verbindung herzustellen. Dabei ist es auch denkbar, dass die Energieversorgungseinheit 2 und das elektrohydraulische Aggregat 3 derart ausgebildet sind, dass die Energieversorgungseinheit 2 in das elektrohydraulische Aggregat 3 lösbar und somit auswechselbar integriert werden kann. Auch hierbei ist wesentlich, dass die Energieversorgungseinheit 2 und das elektrohydraulische Aggregat 3 jeweils Gleichspannungs-Verbindungselemente 9, 10 aufweisen.

Des Weiteren sind eine Kühleinrichtung 13 und eine Heizeinrichtung 14 vorgesehen, wobei dies nicht zwangsweise der Fall sein muss. Die Kühleinrichtung 13 und die Heizeinrichtung 14 können über mindestens ein Fluidverbindungselement 15 mit einem bzw. mehreren korrespondierenden Fluidverbindungselementen 16 des elektrohydraulischen Aggregats 3 verbunden werden, um von diesem mit einen Kühl/Heizmedium versorgt zu werden.

Das elektrohydraulische Aggregat 3 weist zusätzlich Kopplungselement 17 auf, um das elektrohydraulische Aggregat 3 mechanisch, elektrisch und fluidisch mit einem Fahrwerk 6 zu verbinden. Zusätzlich können eine Steuereinrichtung 18, ein Hydraulikflüssigkeitstank 19, ein Kühlmitteltank 20, ein Kühler 21, Ventile 22 und/oder ein Niedervolt-Energiespeicher 23 angeordnet sein, was jedoch nicht zwangsweise der Fall sein muss.

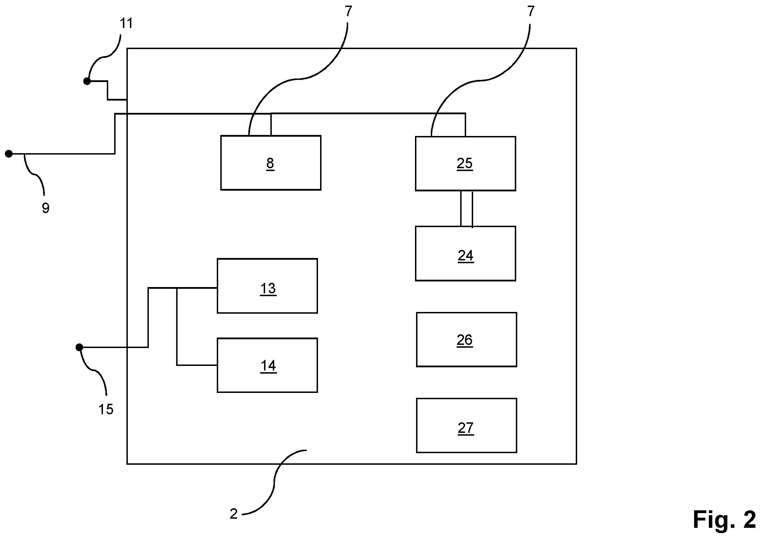

Fig. 2 zeigt ein weiteres Ausführungsbeispiel einer erfindungsgemäßen Energieversorgungseinheit 2. Diese entspricht im Wesentlichen der Energieversorgungseinheit 2 aus Fig. 1, so dass auf die voranstehende Beschreibung verwiesen wird. Zusätzlich zu dem elektrischen Energiespeicher 8 ist ein von einem Verbrennungsmotor 24 betriebener Generator 25 angeordnet, der ebenfalls über das Gleichspannungs-Verbindungselement 9 mit dem Gleichspannungs-Verbindungselement 10 des elektrohydraulischen Aggregats 3 koppelbar ist. Dabei ist auch denkbar, dass für den elektrischen Energiespeicher 8 und den Generator 25 separate Gleichspannungs-Verbindungselemente angeordnet sind. Des Weiteren ist der Generator 25 mit dem elektrischen Energiespeicher 8 elektrisch verbunden ist, so dass dieser von dem Generator 25 geladen werden kann, was jedoch nicht zwangsweise der Fall sein muss.

Weiterhin können ein Kraftstofftank 26 und eine Temperaturregelung 27 für den Verbrennungsmotor 24 vorgesehen sein.

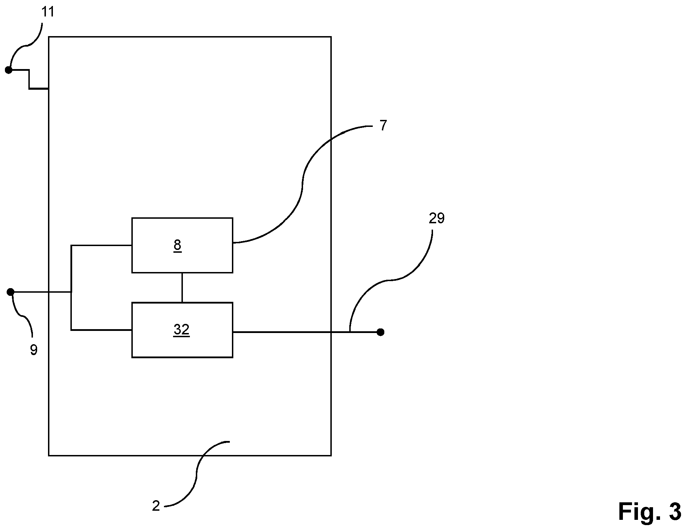

Fig. 3 zeigt ein weiteres Ausführungsbeispiel einer erfindungsgemäßen Energieversorgungseinheit 2. Diese entspricht im Wesentlichen der Energieversorgungseinheit 2 aus Fig. 2, so dass auf die voranstehende Beschreibung verwiesen wird. Der wesentliche Unterschied besteht dabei darin, dass anstatt eines von einem Verbrennungsmotor 24 angetriebenen Generators 25 ein Gleichstrom-Netzanschluss mit Gleichrichter 32 angeordnet ist, der ein Wechselspannungs-Verbindungselement 29 aufweist, um eine elektrische Verbindung mit einem Netzanschluss herzustellen.

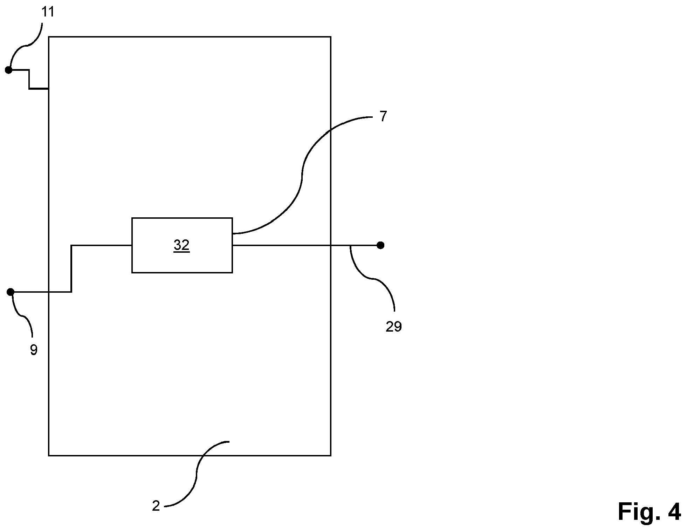

Fig. 4 zeigt ein weiteres Ausführungsbeispiel einer erfindungsgemäßen Energieversorgungseinheit 2. Diese entspricht im Wesentlichen der Energieversorgungseinheit 2 aus Fig. 3, so dass auf die voranstehende Beschreibung verwiesen wird. Im Unterschied zu der Ausführungsform gemäß Fig. 3 ist dabei lediglich ein Gleichstrom-Netzanschluss mit Gleichrichter 32 angeordnet, nicht jedoch ein elektrischer Energiespeicher.

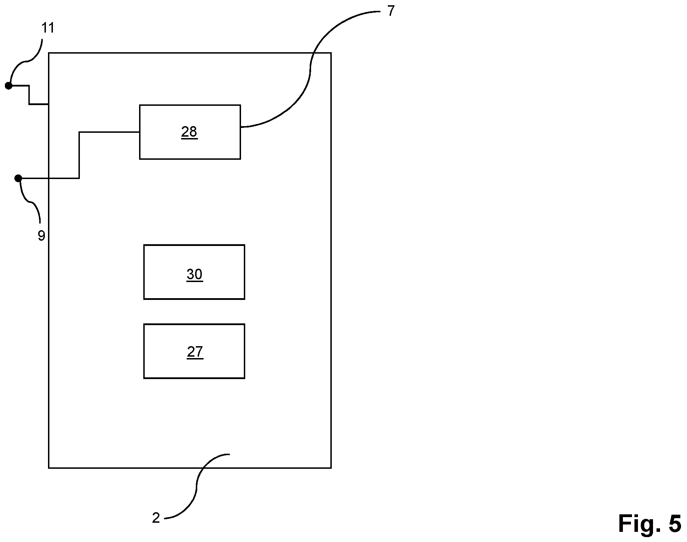

Fig. 5 zeigt ein Ausführungsbeispiel einer erfindungsgemäßen Energieversorgungseinheit 2. Diese entspricht im Wesentlichen der Energieversorgungseinheit 2 aus Fig. 1, so dass auf die voranstehende Beschreibung verwiesen wird. Der wesentliche Unterschied besteht dabei darin, dass eine Brennstoffzelle 28 anstatt eines elektrischen Energiespeichers angeordnet ist. Des Weiteren sind ein Wasserstofftank 30 und eine Temperaturregelung 27 angeordnet.

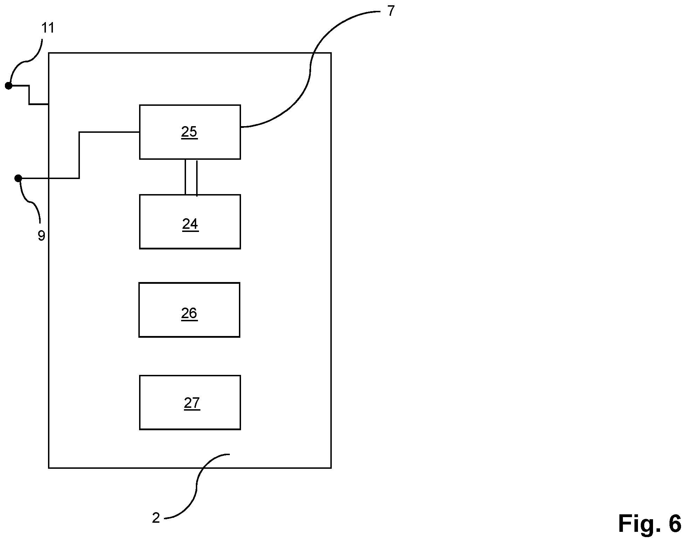

Fig. 6 zeigt ein Ausführungsbeispiel einer erfindungsgemäßen Energieversorgungseinheit 2. Diese entspricht im Wesentlichen der Energieversorgungseinheit 2 aus Fig. 2, so dass auf die voranstehende Beschreibung verwiesen wird. Im Unterschied zu der Ausführungsform gemäß Fig. 2 ist dabei lediglich ein von einem Verbrennungsmotor 24 betriebener Generator 25 angeordnet, nicht jedoch ein elektrischer Energiespeicher.

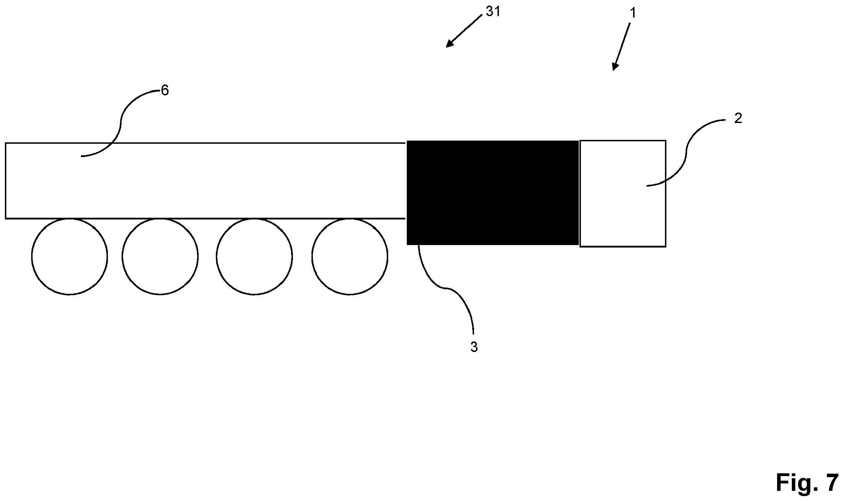

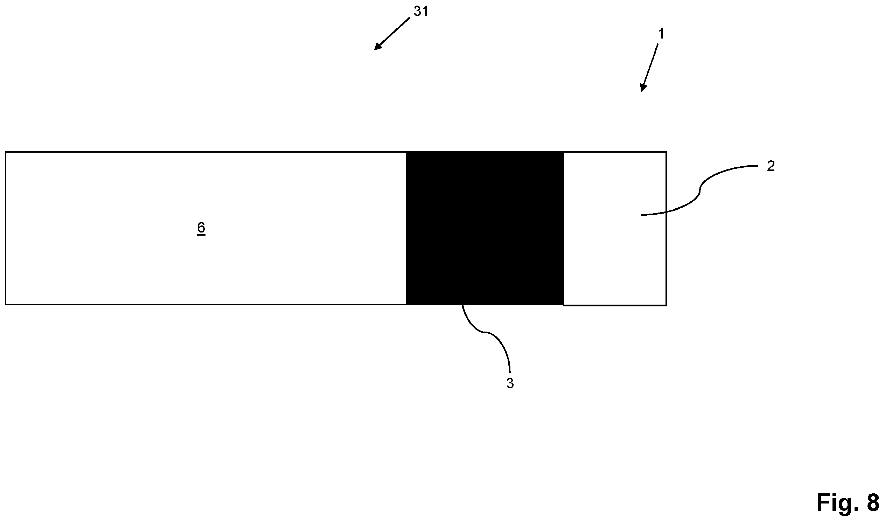

Die Fig. 7 und 8 zeigen ein Ausführungsbeispiel eines erfindungsgemäßen Schwerlast-Modulfahrzeugs 31, das ein Fahrwerk 6 und ein erfindungsgemäßes System 1 aufweist. Dabei ist die Energieversorgungseinheit 2 über entsprechende mechanische Verbindungselemente an der Hinterseite des elektrohydraulischen Aggregats 3 angeordnet, wobei über hier nicht dargestellte Gleichspannungs-Verbindungselemente eine lösbare Gleichspannungsverbindung zwischen der elektrischen Energiequelle und dem Elektromotor hergestellt ist. Die Energieversorgungseinheit 2 kann mit geringem Aufwand von dem elektrohydraulischen Aggregat 3 gelöst und gegen eine andere Energieversorgungseinheit 2 getauscht werden.

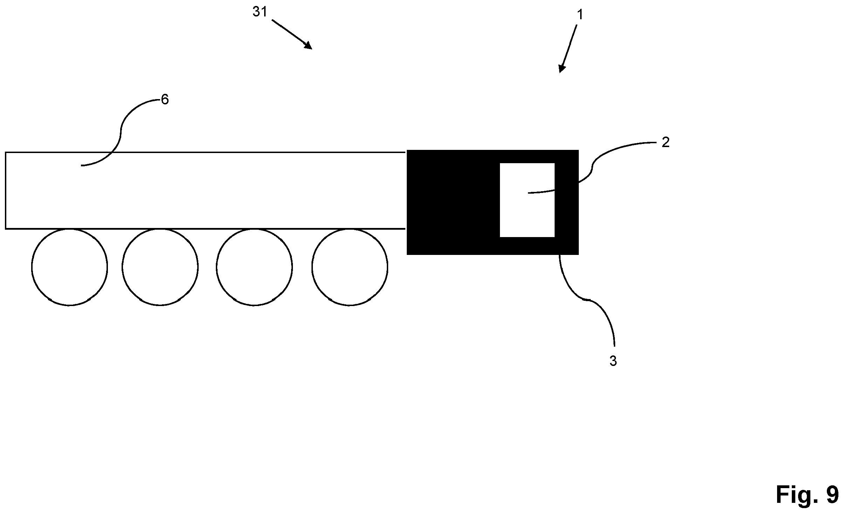

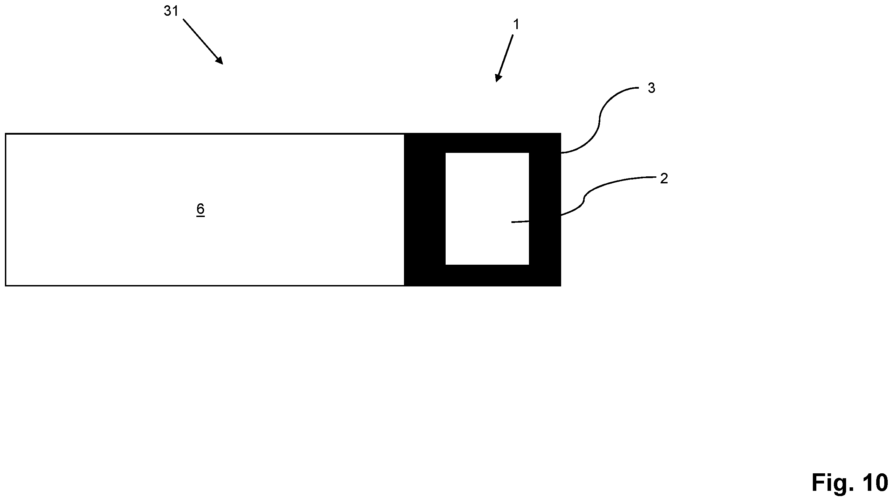

Die Fig. 9 und 10 zeigen ein Ausführungsbeispiel eines weiteren erfindungsgemäßen Schwerlast-Modulfahrzeugs 31, das ein Fahrwerk 6 und ein erfindungsgemäßes System 1 aufweist. Im Unterschied zu dem Ausführungsbeispiel gemäß Fig. 7 und 8 ist die Energieversorgungseinheit 2 - lösbar bzw. austauschbar - in das elektrohydraulische Aggregat 3 integriert, beispielsweise in eine Aufnahme oder in ein Gehäuse des elektrohydraulischen Aggregats 3. Auch hierbei ist in erfindungsgemäßer Weise eine Gleichspannungsverbindung durch miteinander korrespondierende Gleichspannungs-Verbindungselemente geschaffen.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: System
- 2: Energieversorgungseinheit
- 3: elektrohydraulisches Aggregat
- 4: Elektromotor
- 5: Hydraulikpumpe
- 6: Fahrwerk
- 7: elektrische Energiequelle
- 8: elektrischer Energiespeicher
- 9: Gleichspannungs-Verbindungselement (Energieversorgungseinheit)
- 10: Gleichspannungs-Verbindungselement (elektrohydraulisches Aggregat)
- 11: mechanisches Verbindungselement (Energieversorgungseinheit)
- 12: mechanisches Verbindungselement (elektrohydraulisches Aggregat)
- 13: Kühleinrichtung
- 14: Heizeinrichtung
- 15: Fluidverbindungselement (Energieversorgungseinheit)
- 16: Fluidverbindungselement (elektrohydraulisches Aggregat)
- 17: Kopplungselemente
- 18: Steuereinrichtung
- 19: Hydraulikflüssigkeitstank
- 20: Kühlmitteltank
- 21: Kühler
- 22: Ventile
- 23: Niedervolt-Energiespeicher
- 24: Verbrennungsmotor
- 25: Generator
- 26: Kraftstofftank
- 27: Temperaturregelung
- 28: Brennstoffzelle
- 29: Wechselspannungs-Verbindungselement
- 30: Wasserstofftank
- 31: Schwerlast-Modulfahrzeug
- 32: Gleichstrom-Netzanschluss mit Gleichrichter

## Patentansprüche

1. Energieversorgungseinheit (2) für ein elektrohydraulisches Aggregat (3) eines Schwerlast-Modulfahrzeugs (31) mit mindestens einer elektrischen Energiequelle (7) zum Betreiben eines Elektromotors (4) des elektrohydraulischen Aggregats (3) und mindestens einem Gleichspannungs-Verbindungselement (9) zur Herstellung einer lösbaren, elektrischen Gleichspannungsverbindung der mindestens einen elektrischen Energiequelle (7) mit dem Elektromotor (4).

2. Energieversorgungseinheit (2) nach Anspruch 1, **dadurch gekennzeichnet, dass** mindestens ein mechanisches Verbindungselement (12) zur Herstellung einer lösbaren, mechanischen Verbindung mit dem elektrohydraulischen Aggregat (3) und/oder einem Fahrwerk (6) des Schwerlast-Modulfahrzeugs (31) angeordnet ist, und/oder dass es sich bei der mindestens einen elektrischen Energiequelle (7) um eine Brennstoffzelle (28), um einen Energiespeicher (8), um einen von einem Verbrennungsmotor (24) betriebenen Generator (25) und/oder um einen Gleichstrom-Netzanschluss mit Gleichrichter (32) handelt.

3. Energieversorgungseinheit (2) nach Anspruch 2, **dadurch gekennzeichnet, dass** der Gleichstrom-Netzanschluss mit Gleichrichter (32) und der elektrische Energiespeicher (8) elektrisch miteinander verbunden sind.

4. Energieversorgungseinheit (2) nach Anspruch 2 oder 3, **dadurch gekennzeichnet, dass** mindestens ein Wechselspannungs-Verbindungselement (29) zur Herstellung einer lösbaren, elektrischen Wechselspannungsverbindung zwischen dem Gleichstrom-Netzanschluss mit Gleichrichter (32) und einem Netzanschluss angeordnet ist.

5. Energieversorgungseinheit (2) nach einem der Ansprüche 1 bis 4, **dadurch gekennzeichnet, dass** ein Wasserstofftank (30) und/oder ein Kraftstofftank (26) angeordnet ist/sind,
und/oder dass es sich bei dem Gleichspannungs-Verbindungselement (9) und/oder dem Wechselspannungs-Verbindungselement (29) um einen Steckverbinder handelt.

6. Energieversorgungseinheit (2) nach einem der Ansprüche 1 bis 5, **dadurch gekennzeichnet, dass** eine Kühleinrichtung (13) zum Kühlen der mindestens einen elektrischen Energiequelle (7) und/oder eine Heizeinrichtung (14) zum Beheizen der mindestens einen elektrischen Energiequelle (7) angeordnet ist/sind.

7. Energieversorgungseinheit (2) nach Anspruch 6, **dadurch gekennzeichnet, dass** mindestens ein Fluidverbindungselement (15) zur Herstellung einer lösbaren Fluidverbindung der Kühleinrichtung (13) und/oder der Heizeinrichtung (14) mit dem elektrohydraulischen Aggregat (3) angeordnet ist.

8. System (1) umfassend eine Energieversorgungseinheit (2) nach einem der Ansprüche 1 bis 7 und ein elektrohydraulisches Aggregat (3) für ein Schwerlast-Modulfahrzeug (31), wobei das elektrohydraulische Aggregat (3) einen Elektromotor (4) und mindestens eine von diesem angetriebene Hydraulikpumpe (5) aufweist, wobei an dem elektrohydraulischen Aggregat (3) mindestens ein zu dem elektrischen Gleichspannungs-Verbindungselement (9) der Energieversorgungseinheit (2) komplementäres elektrisches Gleichspannungs-Verbindungselement (10) angeordnet ist, so dass der mindestens eine elektrische Energiespeicher (8) lösbar, elektrisch mit dem Elektromotor (4) verbindbar ist.

9. System (1) nach Anspruch 8, **dadurch gekennzeichnet, dass** an dem elektrohydraulischen Aggregat (3) mindestens ein mechanisches Verbindungselement (12) angeordnet ist, das komplementär zu dem mindestens einen mechanischen Verbindungselement (11) der Energieversorgungseinheit (2) ausgebildet ist, so dass die Energieversorgungseinheit (2) und das elektrohydraulische Aggregat (3) lösbar, mechanisch miteinander verbindbar sind.

10. System (1) nach Anspruch 8 oder 9, **dadurch gekennzeichnet, dass** an dem elektrohydraulischen Aggregat (3) mindestens eine Aufnahme für die Energieversorgungseinheit des elektrohydraulische Aggregats (3) angeordnet ist, beispielsweise ein Rahmen oder ein Gehäuse.

11. System (1) nach Anspruch 10, **dadurch gekennzeichnet, dass** die Energieversorgungseinheit (2), in Längsrichtung des elektrohydraulischen Aggregats (3) gesehen, seitlich an dem elektrohydraulischen Aggregat (3) festlegbar ist, vorzugsweise an beiden Seiten des elektrohydraulischen Aggregats (3).

12. System (1) nach einem der Ansprüche 8 bis 11, **dadurch gekennzeichnet, dass** die Energieversorgungseinheit (2) an einer Unterseite und/oder an einer Oberseite des elektrohydraulischen Aggregats (3) festlegbar ist.

13. System (1) nach einem der Ansprüche 8 bis 12, **dadurch gekennzeichnet, dass** mindestens eine Energieversorgungseinheit (2) an einer Vorderseite und/oder an einer Hinterseite des elektrohydraulischen Aggregats (3) festlegbar ist.

14. Schwerlast-Modulfahrzeug (31) mit mindestens einem System (1) nach einem der Ansprüche 8 bis 13 und mindestens einem Fahrwerk (6).

15. Schwerlast-Modulfahrzeug (31) nach Anspruch 14, **dadurch gekennzeichnet, dass** an dem Fahrwerk (6) mindestens ein mechanisches Verbindungselement angeordnet ist, das komplementär zu dem mindestens einen mechanischen Verbindungselement (9) der Energieversorgungseinheit (2) ausgebildet ist, so dass die Energieversorgungseinheit (2) und das Fahrwerk (6) lösbar, mechanisch miteinander verbindbar sind.
